# EUROPEAN PATENT SPECIFICATION

(11) **EP 3 942 083 B1**
(45) Date of publication and mention of the grant of the patent: **25.11.2026**
(21) Application number: 20710549.5
(22) Date of filing: 17.03.2020
(51) Int. Cl.: H01M 50/242, H01M 50/249

(54) **BATTERY BOX BOTTOM PART FOR ELECTRIC VEHICLES**
BATTERIEKASTENUNTERTEIL FÜR ELEKTROFAHRZEUGE
PARTIE INFÉRIEURE DE BOÎTIER DE BATTERIE POUR VÉHICULES ÉLECTRIQUES

(30) Priority: 19.03.2019 FR 1902816
(43) Date of publication of application: 26.01.2022
(73) Proprietor: Constellium Neuf Brisach, 68600 Biesheim (FR)
(72) Inventor: JESSNER, Peter, 38300 BOURGOIN-JALLIEU (FR); LIST, Jocelyne, 38120 SAINT EGREVE (FR); MULLER, Estelle, 38000 GRENOBLE (FR)
(74) Representative: Constellium - Propriété Industrielle
(86) International application number: PCT/EP2020/057348
(87) International publication number: WO 2020/187942

(56) References cited:
- EP-A1- 1 698 710
- EP-A1- 1 939 026
- EP-A1- 1 939 027
- EP-A2- 2 468 609
- CN-A- 109 097 645
- DE-A1- 102017 102 685
- US-A- 5 667 602
- US-A1- 2001 053 477
- US-A1- 2015 152 537
- US-A1- 2018 112 297
- "Aluminium and aluminium alloys - wrought products - temper designations, EN 515:1993", 1 August 1993, EUROPAEISCHE NORM - EUROPEAN STANDARD - NORME EUROPEENNE, XX, XX, PAGE(S) 1 - 16, XP002544658

## Description

### Field of the Invention

The present invention concerns the field of electric or hybrid motor vehicles.

The present invention concerns more particularly battery boxes of such an electric or hybrid motor vehicle, consisting of a peripheral frame which has a generally convex polygonal shape in planar view, a bottom part which is joined to the lower surface of the peripheral frame made of aluminum alloy and a top cover for closing.

### State of the Art

A battery box may comprise a chamber receiving electrical energy storage cell element units, enabling production of electrical energy for driving the electric or hybrid vehicle. The units of electrical energy storage cell elements are placed in the battery box, after which the battery box is mounted in an electric or hybrid motor vehicle. DE 102017102685 A1 discloses battery boxes for electric vehicles made from aluminium magnesium alloys.

An electric motor vehicle or hybrid vehicle (electric motor vehicle which is also provided with an internal combustion engine) requires a large number of batteries for driving a motor. Some examples of battery box of conventional batteries for electrical vehicles can be in references EP 1939026, US 2007/0141451, US 2008/0173488, US 2009/0236162, EP 2623353, EP 1939026, EP 1939027.

Such a battery box is required to have a good stiffness to prevent the container from being easily deformed even when the vehicle has an accident, and a protective function which, even when deformation reaches the container, minimizes breakage of the batteries. Therefore, a battery box is requested to have sufficient mechanical properties to protect the modules during crash impacts. CN106207044 discloses a carbon fiber composite material battery box made of carbon fiber interlayers, PVC foam laminated, allowing to increase the stiffness and the performance of side impact. CN205930892 discloses a utility model which uses honeycomb baffle structure in place of the bottom part to improve crash safety performance. EP2766247 proposes the use of shells and a free deformation space between the lateral wall of the battery sub-compartment and the vehicle body longitudinal beam.

A battery box is also required to be perfectly sealed, to avoid the ingress of any fluid into the battery box chamber or the leakage of any electrolyte contained into the electrical energy storage cell elements out of the battery box chamber. Tight sealing is particularly mandatory when the battery box is fixed under the floor of the vehicle to prevent water or mud ingress. In addition, corrosion resistance against inward or outward fluids is needed.

In order to improve the running performance of a vehicle, a battery box has to have a minimized weight while at the same time offering maximum resistance to crash, tight sealing, corrosion resistance, ability to accommodate temperature control and ability to contain the maximum number of electrical energy storage cell elements.

Patent application CN108342627 discloses an electric vehicle battery box prepared from the following raw materials in parts by mass: 0.4-0.9 parts of iron, 0.5-0.8 parts of titanium, 0.7-1.3 parts of zinc, 0.2-0.6 parts of silicon, 3-6 parts of nickel, 4-8 parts of copper, 1-3 parts of manganese, 80-90 parts of aluminum, 0.2-0.6 parts of boron carbide, 0.8-1 part of chromium oxide, 0.2-0.25 parts of magnesium oxide, 0.2-0.5 parts of silicon oxide, 0.2-0.5 parts of titanium oxide, 0.2-0.5 parts of yttrium oxide, 0.02-0.05 parts of beryllium carbide, 0.02-0.05 parts of zirconium carbide and 0.02-0.05 parts of tungsten carbide.

Patent application CN107201464 discloses an electric automobile battery box prepared from, by weight, 0.4-0.9 part of iron, 0.5-0.8 part of titanium, 0.7-1.3 part of zinc, 0.2-0.6 part of silicon, 0.1-0.15 part of titanium, 3-6 parts of nickel, 4-8 parts of copper, 1-3 parts of manganese and 80-90 parts of aluminum.

Patent application CN107760162 discloses a high-strength corrosion-resistant passenger car battery box which comprises a box body, wherein the box body is made of a high-strength alloy material; the surface of the box body is coated by a layer of a corrosion-resistant coating; the aluminum alloy material is prepared from the following components in percentage by mass: 0.21-0.47% of Mn, 1.83-3.75% of Cu, 0.23-0.47% of Ti, 2.35-7.48% of SiC, 0.13-0.54% of Er and the balance of pure aluminum and trace impurities.

Patent application EP1698710 discloses an aluminum-magnesium alloy sheet having a high strength prior to baking treatment, and having a high bake softening resistance, containing, as a percentage of mass, 2-5% magnesium, more than 0.05% and 1.5% or less iron, 0.05-1.5% manganese, and crystal grain refiner, the remainder comprising aluminum and inevitable impurities, and among the inevitable impurities, less than 0.20% silicon being contained, the total amount of iron and manganese being greater than 0.3%, the amount of iron dissolved in solid solution being 50 ppm or greater, 5000 or more intermetallic compounds with a circle-equivalent diameter of 1-6 µm existing per square millimeter, and the average diameter of the recrystallized grains being 20 µm or smaller.

CN109097645 discloses an aluminum alloy strip material for a power battery pack tray of a hybrid electric vehicle and a preparation method of the aluminum alloy strip material, the aluminum alloy strip material being prepared from the following chemical components in percentage by mass: not greater than 0.10% of Si, 0.20%-0.30% of Fe, 0.05% or less of Cu, 0.20%-0.30% of Mn, 2.60%-3.00% of Mg, 0.30%or less of Cr, 0.05% or less of Zn, 0.01%-0.03% of Ti, 0.0004% or less of Na, other impurities each of which is not greater than 0.05% and all of which are not greater than 0.15%, and the balance of Al.

US20150152537A1 relates to an aluminium alloy, the use of an aluminium alloy strip or sheet and a method for producing an aluminium alloy strip or sheet.

The present invention has been developed to improve the battery box bottom part for electric or hybrid motor vehicles. The bottom part of the battery box may be made from sheets or extrusions. Whereas sheets offer complex bottom shape obtained with deep drawing and high protective space, extrusions enable high stiffness and possibility of integrating the cooling in the bottom of the battery enclosure. The present invention relates to a sheet product for the bottom part, which is simultaneously light, resistant against intrusion, sufficiently formable and sealable to provide a leak tight box, corrosion resistant, able to accommodate temperature variations, sufficiently stiff and strong, many of these properties being antagonistic.

### Object of the invention

An object of the invention is a bottom part of battery box for electric or hybrid motor vehicles made from an aluminium alloy sheet having a thickness between 2 and 6 mm, wherein said aluminum alloy comprises 2.5 to 4.0 wt.% of Mg, 0.1 to 0.8 wt.% of Mn, 0.4 wt.% or less of Si, 0.5 wt.% or less of Fe, 0.5 wt.% or less of Cu, 0.05 wt.% or less of Cr, 0.1 wt.% or less of Zn, 0.1 wt.% or less of Ti, rest aluminium and unavoidable impurities up to 0.05 wt.% each and 0.15 wt.% total.

Another object of the invention is a method to make a bottom part of battery box according to the invention comprising successively
- preparing an aluminium alloy comprising comprises 2.5 to 4.0 wt.% of Mg, 0.1 to 0.8 wt.% of Mn, 0.4 wt.% or less of Si, 0.5 wt.% or less of Fe, 0.5 wt.% or less of Cu, 0.05 wt.% or less of Cr, 0.1 wt.% or less of Zn, 0.1 wt.% or less of Ti, rest aluminium and unavoidable impurities up to 0.05 wt.% each and 0.15 wt.% total;
- casting said aluminium alloy into a rolling ingot;
- homogenizing and/or reheating said rolling ingot;
- hot rolling and optionally cold rolling said rolling ingot to obtain a sheet with a thickness between 2 mm and 6 mm.

### Description of the figures.

### FIGURES

[Fig. 1] Figure 1 is an exploded view of a battery box for an electric or hybrid motor vehicle.
[Fig. 2] Figure 2 shows the experimental set up of the intrusion test.
[Fig. 3] Figure 3 shows an example of Force vs Displacement curve at the center position for Alloy A and Alloy B.
[Fig. 4] Figure 4 shows an example of Force vs Displacement curve at the corner position for Alloy A and Alloy B.
[Fig. 5] Figure 5 shows the positioning of alloy A and alloy B in graph of Center Position Maximum Force vs. Corner Position Maximum Force.
[Fig. 6] Figure 6 shows the positioning of alloy A and alloy B in graph of Center Position Maximum Force vs. Corner Position Maximum Force, for a H2X (200°C) temper, the thickness in mm is indicated above the data point.

### Detailed description of the invention

All aluminium alloys referred to in the following are designated using the rules and designations defined by the Aluminium Association in Registration Record Series that it publishes regularly, unless mentioned otherwise.

Metallurgical tempers referred to are designated using the European standard EN-515 (1993).

All the alloy compositions are provided in weight % (wt.%).

Unless mentioned otherwise, static mechanical characteristics, i.e., ultimate tensile strength Rₘ, tensile yield stress R_{p0,2}, uniform elongation at maximum force Ag and elongation at break A, are determined by a tensile test according to standard NF EN ISO 6892-1 (2016), the location at which the pieces are taken and their direction being defined in standard EN 485 (2016).

Unless otherwise specified, the definitions of standard EN 12258 (2012) apply. In particular, a sheet is a rolled product with a rectangular cross-section and a nominal thickness less than 6,35 mm but not less than 0,15 mm and with slit, sheared or sawed edges.

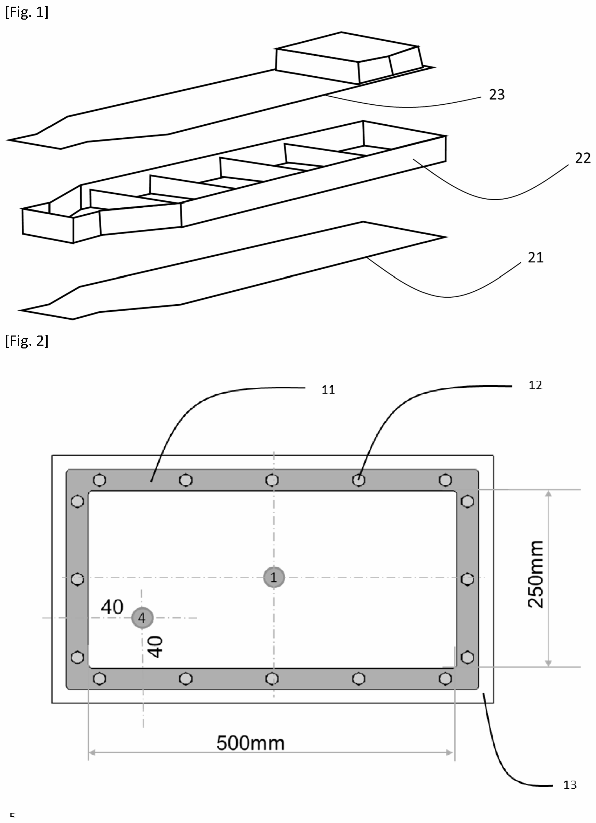

As illustrated by Figure 1, a battery box for electric or hybrid motor vehicles includes a bottom part 21, an outer peripheral frame 22 formed to be positioned on an outer peripheral edge portion of the bottom part and a top plate or cover 23 placed on the peripheral frame from above. The outer peripheral frame is commonly joined to the bottom part by assembling means such as welding or bonding to ensure the resistance of the assembly and the sealing of the edges between the bottom part and the peripheral frame. The outer peripheral frame has a generally convex polygonal shape in planar view. The top cover is assembled to the peripheral frame by assembling means, such as rivets or screws and may also be sealed.

A specific intrusion test was designed to evaluate the resistance of the bottom part to intrusion. To evaluate the resistance of the sheet material against intrusion, two critical configurations on the bottom plate are possible, which are intrusion close to and far from the outer peripheral frame. Close to the frame, the mechanical system is stiff allowing only little deformation of the sheet during intrusion. Thus, fracture of the material is the dominant damage mechanism. In the center position, far from the frame, the system behaves elastically, and soft and plastic deformation is possible leading to a high risk of contact of the sheet with the battery modules. The test is carried out on a static loading machine Zwick 400. As illustrated by Figure 2, the sheet 13 is clamped between an upper and a lower steel frame 11 having a width of 30 mm and fixed with several screws 12. A cylindrical punch with a diameter of 19.6 mm and rounded edges (r = 1.5 mm) is fixed on the machine to perform an intrusion into the sheet. The force applied on the punch and its displacement are measured. The frame can be moved such as to test two positions on the same sheet center reference 1 and corner reference 4 positions, see Figure 2. The total punch displacement during the test is set to a distance of 15 mm chosen to represent a typical space between the bottom plate and the batteries. The test is performed under quasi-static conditions. The maximal resistance of the sheet material is evaluated for the intrusion of an object into the bottom plate considering a load of 1.5 t.

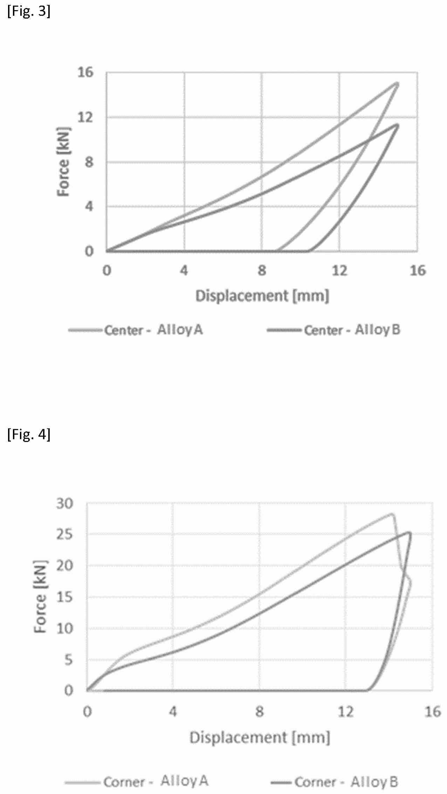

In Figures 3 to 5 an example of intrusion test result for two 5xxx alloys in 4mm thickness is presented. The following values are obtained from the tests to rank the intrusion behavior of the two materials.
- For the center position: the force at 15 mm displacement of the punch, in this position no rupture is observed as illustrated by Figure 3, this value is referred to as Center Position Maximum Force and is expressed in kN.
- For the corner position: the maximum force value which is reached at the moment of rupture or at 15 mm if the sheet resists the rupture during the full displacement as illustrated by Figure 4, this value is referred to as Corner Position Maximum Force and is expressed in kN.

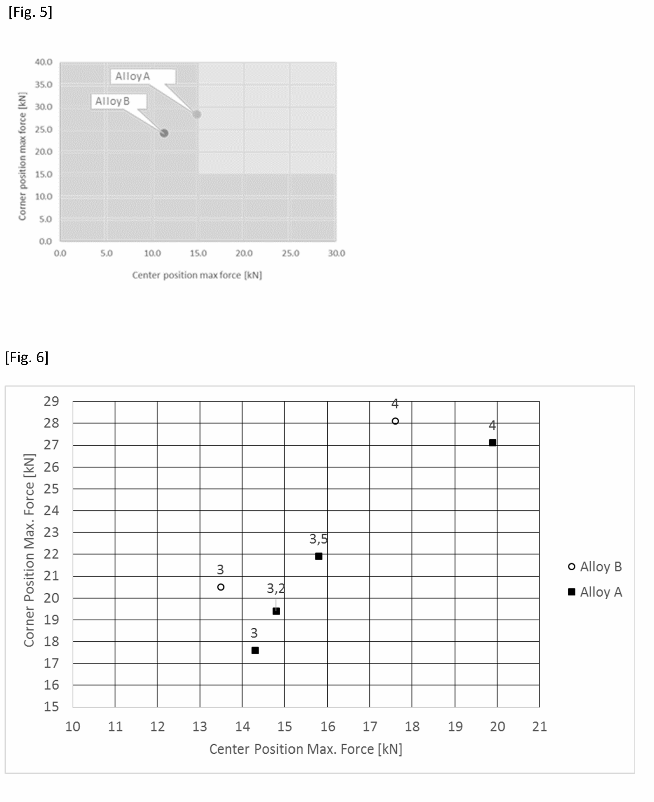

Finally, the results are presented in a plot having the Center Position Maximum Force on the x-axis and the Corner Position Maximum Force on the y-axis, as illustrated by Figure 5.

According to the invention there is provided a bottom part of battery box for electric or hybrid motor vehicles made from an aluminium alloy sheet having a thickness between 2 and 6 mm, wherein said aluminum alloy comprises 2.5 to 4.0 wt.% of Mg, 0.1 to 0.8 wt.% of Mn, 0.4 wt.% or less of Si, 0.5 wt.% or less of Fe, 0.5 wt.% or less of Cu, 0.05 wt.% or less of Cr, 0.1 wt.% or less of Zn, 0.1 wt.% or less of Ti, rest aluminium and unavoidable impurities up to 0.05 wt.% each and 0.15 wt.% total.

In particular, the present inventors have found that the sheets according to the invention provide an improved combination of intrusion properties, as described by the Center and Corner Position Maximum Force and corrosion properties, as described by the intergranular corrosion resistance of the sheet measured by Nitric Acid Mass Loss Test (NAMLT).

The sheets according to the invention are made of a 5XXX series alloy having a Mg content from 2.5 to 4.0 wt.%. When the Mg content is lower than 2.5 wt.% the intrusion properties are insufficient, whereas when the Mg content is above 4.0 wt.% the corrosion resistance is insufficient. Preferably, the Mg content is from 2.8 to 3.6 wt.% and preferentially from 3.0 to 3.4 wt.% and even more preferably from 3.1 to 3.3 wt.%. The balance between in particular intrusion and corrosion properties is dependent on the chosen temper, however when the Mg content is not within the range according to the invention the balance is not satisfactory for any chosen temper.

The Mn content is from 0.1 to 0.8 wt.%. When the Mn content is lower than 0.1 wt.% the intrusion properties are insufficient. Preferably, the Mn content is from 0.5 to 0.7 wt.% and preferentially from 0.51 to 0.61 wt.%, in particular to improve again the intrusion properties.

The Si content is advantageously from 0.1 to 0.3 wt.% and preferably from 0.10 to 0.25 wt.%.

The Fe content is advantageously from 0.1 to 0.4 wt.% and preferably from 0.15 to 0.35 wt.%.

The Cu content is advantageously from 0.05 to 0.2 wt.% and preferably from 0.06 to 0.15 wt.%.

The Zn content is advantageously at most 0.05 wt.% and preferably the Cr and/or Zn content is at most 0.03 wt. %. The Ti content is advantageously from 0.01 to 0.08 wt.%.

The preferred content for Si, Fe, Cu, Cr, Zn and/or Ti are chosen in particular to improve the balance between in particular intrusion and corrosion properties, as well as formability, stiffness and strength.

After preparation of the alloy, a rolling ingot is obtained typically by vertical semi-continuous casting. The ingot is then optionally homogenized.

When homogenization is carried out, the temperature preferably chosen is between 535 °C and 550 °C. for a duration of at least 12 hours. However, the present inventors have found that, surprisingly, excellent results are obtained in the absence of homogenization. In one embodiment, the homogenization step is not carried out, but a simple reheating is carried out before hot rolling at a temperature of between 500 °C and 550 °C.

After homogenization and / or reheating, said ingot is hot-rolled and optionally cold rolled to obtain a sheet with a thickness between 2 mm and 6 mm. Preferably, a cold rolling step is performed in order to obtain the desired microstructure after final annealing.

The sheet may be in an H19 temper, as cold rolled, in an O temper, annealed to the lowest strength, or H2X temper, strain-hardened and partially annealed. Preferably, the sheet is used in an H2X temper. Preferably, the annealing to obtain the O temper is carried out at a temperature higher than 300 °C. A preferred temper H2X may be further defined by adjusting the mechanical properties with the reference of the corresponding O temper of the sheet, at the same thickness. Advantageously, in the LT direction, the ultimate tensile strength Rm of the sheet is at least 25%, preferentially at least 35% and preferably at least 40% higher than the ultimate tensile strength of the sheet in O temper and/or the tensile yield strength R_{p0,2} of the sheet is at least 115%, preferentially at least 125% and preferably at least 135 % higher than the tensile yield strength of the sheet in O temper. Advantageously, in the H2X temper, the percentage of uniform elongation at maximum force Ag of the sheet is between 6% and 15% and preferably between 7.5% and 10%.

In a first embodiment, the annealing to obtain the preferred H2X temper is carried out at a temperature between 180 °C and 270 °C and preferentially at a temperature between 180 °C and 240 °C. Preferably, the annealing time is less than 2 hours and preferentially less than one hour. In an embodiment, the H2X temper is obtained by heating to the desired temperature with no soaking time. This first embodiment is typically achieved by batch annealing, preferably under controlled inert atmosphere

In a second embodiment, the annealing to obtain the preferred H2X temper is achieved with a continuous annealing furnace, the line speed and annealing temperature being adapted to obtain the targeted mechanical properties. The typical peak metal temperature (PMT) range to obtain the preferred H2X temper with a continuous annealing furnace is from 250°C to 400°C and preferably from 300°C to 350°C.

Following annealing a surface treatment of the sheet adapted to assembly operations and/or finishing, and particularly adhesive bonding and/or welding and/or corrosion protection such as painting, may be advantageous. In particular, the formation of a chemical conversion coating, in which the initial passive film is replaced by a passivation film comprising other protective metallic elements, is an advantageous surface treatment. Thus, chemical conversion coating, in particular carried out with treatment agents containing chromates, or preferably treatment agents containing anions containing at least one element in the group consisting of zirconium, titanium, chromium with oxidation state III, cerium, vanadium, molybdenum, manganese is applicable. Preferred treatment agents are chromium-free for environmental reasons and use elements such as organophosphorous, silane and derivatives, titanium and/or zirconium. In a preferred embodiment, a chemical conversion coating containing Ti and Zr with 2 to 8 mg/m² of each of these elements on each face is provided.

Using a continuous annealing furnace provides the advantage to be able to apply a surface preparation directly after annealing, in-line, before coiling. Surface preparation can be also applied separately after batch annealing with a dedicated surface treatment line.

Finally, the sheet is cut to size and optionally formed to obtain a bottom part of battery box.

The bottom part of battery box of the invention is particularly advantageous because of it intrusion properties and corrosion resistance properties. In particular, the intergranular corrosion resistance of the sheet according to the invention measured by Nitric Acid Mass Loss Test NAMLT according to ASTM G67 standard is less than 3 mg/cm² and less than 5 mg/cm² after aging for 17 hours at 130 °C.

With the products according to the invention, it is possible to use sheets having a reduced thickness. In particular, with the present invention it is provided a bottom part of battery box wherein the sheet has a thickness of at most 3.5 mm and wherein the Center Position Maximum Force and the Corner Position Maximum Force, expressed in kN are at least 14 kN and preferably at least 14.5 kN and more preferably at least 15 kN.

Whereas this invention is here illustrated and described with reference to an embodiment thereof presently contemplated as the best mode of carrying out such invention in actual practice, it is to be understood that various changes may be made in adapting the invention to different embodiments without departing from the broader inventive concepts disclosed herein and comprehended by the claims that follow.

### Examples

In this example, several sheets made of rolling ingots having the composition disclosed in Table 1 were prepared. Alloys A and B are according to the invention. The rolling ingots were reheated at the temperature of 510°C-545°C for at least one hour, hot rolled and cold rolled to sheets having a final thickness between 2 and 5 mm.

The sheets were then annealed at 1h at 350°C for alloys A, Band D or 1 h at 320 °C for alloy C to a O temper or to a H2X temper by annealing 0.5h at 255°C or by annealing at 200°C (heating to temperature with no soaking time), or kept to a H19 temper (as cold rolled).

**[Tableau 1]**

| | Si | Fe | Cu | Mn | Mg | Cr | Zn | Ti |
|---|---|---|---|---|---|---|---|---|
| A | 0.22 | 0.25 | 0.09 | 0.52 | 3.2 | 0.01 | 0.01 | 0.02 |
| B | 0.19 | 0.17 | 0.02 | 0.24 | 2.8 | 0.01 | 0.01 | 0.02 |
| C | 0.10 | 0.20 | 0.07 | 0.37 | 4.7 | 0.01 | 0.01 | 0.02 |
| D | 0.13 | 0.27 | 0.08 | 0.52 | 4.4 | 0.11 | 0.10 | 0.02 |
| E | 0.20 | 0.26 | 0.09 | 0.52 | 3.2 | 0.02 | 0.01 | 0.02 |

| | | | | | | | | |
|---|---|---|---|---|---|---|---|---|
| Composition of the ingots in wt.% | | | | | | | | |

The tensile yield strength, R_{p0,2}, ultimate tensile strength, Rₘ, percentage uniform elongation at maximum force Ag and elongation at break A were determined in the transverse direction using methods known to one of ordinary skill in the art. The tensile tests were performed according to ISO/DIS 6892-1. The results are provided in Table 2.

**[Tableau 2]**

| Material Description | | | Mechanical Properties | | | |
|---|---|---|---|---|---|---|
| Alloy | Thickness (mm) | Temper | Rp0.2 [MPa] | Rm [MPa] | Ag [%] | A [%] |
| | 3 | O | 118 | 244 | 20.1 | - |
| | 3 | H2X (255°C) | 224 | 301 | 10.4 | 11.9 |
| | 3 | H2X (200°C) | 304 | 355 | 7.6 | 9.3 |
| | 3 | H19 | 331 | 376 | 4.7 | 6.2 |
| | 4 | O | 112 | 241 | 18.4 | 22.9 |
| | 4 | H2X (255°C) | 225 | 293 | 9.6 | 13.1 |
| A | 4 | H2X (200°C) | 276 | 337 | 9.4 | 11.7 |
| | 4 | H19 | 277 | 338 | 6.6 | 8.1 |
| | 3,5 | H2X (200°C) | 282 | 343 | 8.1 | 11.4 |
| | 3,2 | H2X (200°C) | 290 | 350 | 8.1 | 11.1 |
| | 2,5 | O | 120 | 244 | 21.0 | 23.9 |
| | 2 | H2X (200°C) | 315 | 367 | 8.0 | 9.8 |
| B | 3 | O | 104 | 212 | 18.9 | 23.1 |
| | 3 | H2X (255°C) | 232 | 281 | 9.0 | 12.0 |
| | 3 | H2X (200°C) | 249 | 296 | 6.7 | - |
| | 4 | O | 94 | 208 | 18.0 | 24.0 |
| | 4 | H2X (200°C) | 231 | 281 | 7.4 | 11.2 |
| | 5 | H2X (255°C) | 207 | 259 | 8.3 | 12.6 |
| C | 2,5 | O | 146 | 281 | 23.0 | 26.3 |
| D | 3 | O | 147 | 298 | 19.4 | 21.1 |
| E | 3 | H2X (CA)* | 246 | 310 | 9.0** | 11.1 |

| | | | | | | |
|---|---|---|---|---|---|---|
| * : CA : Continuous Annealing with a Peak Metal Temperature of 320 °C / ** estimate Mechanical properties | | | | | | |

The intergranular corrosion resistance of the sheets was measured by Nitric Acid Mass Loss Test (NAMLT) according to ASTM G67 standard. The results of the mass lost test are lower than 3 mg/cm² and lower than 5 mg/cm2 after aging 17 hours at 130 °C for the sheets according to the invention. The results are disclosed in Table 3.

**[Tableau 3]**

| Material Description | | | Corrosion [mass loss mg/cm²] | |
|---|---|---|---|---|
| Alloy | Thickness (mm) | Temper | as delivered | After 17 h at 130°C |
| A | 3 | O | 1.2 | 2.1 |
| | 3 | H2X (255°C) | 1.3 | 2.0 |
| | 3 | H2X (200°C) | 2.4 | 3.9 |
| | 3 | H19 | 1.2 | 2.4 |
| | 4 | O | 1.4 | 1.4 |
| | 4 | H2X (255°C) | 1.3 | 2.0 |
| | 4 | H2X (200°C) | 2.2 | 3.9 |
| | 4 | H19 | 1.3 | 3.5 |
| B | 3 | O | 1.1 | 1.1 |
| | 3 | H2X (255°C) | 1.2 | 1.2 |
| | 4 | O | 1.1 | 1.4 |
| | 5 | H2X (255°C) | 1.2 | 1.1 |
| C | 2,5 | O | 1.2 | 42.5 |
| D | 3 | O | 1.7 | 33.8 |

| | | | | |
|---|---|---|---|---|
| Corrosion properties | | | | |

The Center Position Maximum and the Corner Position Maximum Force were characterized as previously described. The results are provided in Table 4. Figure 6 illustrates the results obtained with the H2X (200°C) temper for alloys A and B. The sheet thickness is provided above the symbols. In this preferred temper, there is an advantage to use alloy A compared to alloy B and it is possible to reduce the sheet thickness while still maintaining a significant intrusion resistance.

**[Tableau 4]**

| Material Description | | | Intrusion | |
|---|---|---|---|---|
| Alloy | Thickness (mm) | Temper | Center Position Max. Force [kN] | Corner Position Max. Force [kN] |
| | 3 | O | 9.3 | 20.6 |
| | 3 | H2X (255°C) | 12.6 | 18 |
| | 3 | H2X (200°C) | 14.3 | 17.6 |
| | 3 | H19 | 13.4 | 12.7 |
| A | 4 | O | 14.9 | 28.4 |
| | 4 | H2X (255°C) | 17.6 | 27.6 |
| | 4 | H2X (200°C) | 19.9 | 27.1 |
| | 4 | H19 | 20.0 | 24.0 |
| | 3,5 | H2X (200°C) | 15.8 | 21.9 |
| | 3,2 | H2X (200°C) | 14.8 | 19.4 |
| | 2,5 | O | 7.8 | 17.3 |
| | 2 | H2X (200°C) | 9.1 | 10.1 |
| B | 3 | O | 8.1 | 18.1 |
| | 3 | H2X (255°C) | 13.1 | 18.4 |
| | 3 | H2X (200°C) | 13.5 | 20.5 |
| | 4 | O | 11.3 | 24.2 |
| | 4 | H2X (200°C) | 17.6 | 28.1 |
| | 5 | H2X (255°C) | 21.9 | 36.5 |
| C | 2,5 | O | 8.0 | 19.5 |
| D | 3 | O | 10.7 | 23.5 |

| | | | | |
|---|---|---|---|---|
| Intrusion properties | | | | |

## Claims

1. A bottom part of battery box for electric or hybrid motor vehicles made from an aluminium alloy sheet having a thickness between 2 and 6 mm, wherein said aluminum alloy comprises 2.5 to 4.0 wt.% of Mg, 0.1 to 0.8 wt.% of Mn, 0.4 wt.% or less of Si, 0.5 wt.% or less of Fe, 0.5 wt.% or less of Cu, at most 0.05 wt.% of Cr, 0.1 wt.% or less of Zn, 0.1 wt.% or less of Ti, rest aluminium and unavoidable impurities up to 0.05 wt.% each and 0.15 wt.% total.

2. A bottom part of battery box according to claim 1, wherein the Mn content is from 0.5 to 0.7 wt.% and preferably from 0.51 to 0.61 wt.%.

3. A bottom part of battery box according to claim 1 or claim 2, wherein the Si content is from 0.1 to 0.3 wt.% and preferably from 0.10 to 0.25 wt.%.

4. A bottom part of battery box according to any one of claims 1 to 3, wherein the Fe content is from 0.1 to 0.4 wt.% and preferably from 0.15 to 0.35 wt.%.

5. A bottom part of battery box according to any one of claims 1 to 4, wherein the Mg content is from 2.8 to 3.6 wt.% and preferably from 3.0 to 3.4 wt.% and even more preferably from 3.1 to 3.3 wt.%.

6. A bottom part of battery box according to any one of claims 1 to 5, wherein the sheet is in an H2X temper.

7. A bottom part of battery box according to claim 6, wherein the partial annealing of the H2X temper is obtained by an annealing at a temperature between 180 °C and 270 °C, and preferably at a temperature between 180 °C and 240 °C, typically by batch annealing.

8. A bottom part of battery box according to claim 6, wherein the partial annealing of the H2X temper is obtained with a continuous annealing furnace typically with a peak metal temperature range from 250 °C to 400 °C and preferably from 300 °C to 350 °C.

9. A bottom part of battery box according to any one of claims 6 to 8 wherein, in the LT direction, the ultimate tensile strength Rₘ of the sheet is at least 25%, preferentially at least 35% and preferably at least 40% higher than the ultimate tensile strength of the sheet in O temper and/or the tensile yield strength R_{p0,2} of the sheet is at least 115% preferentially at least 125% and preferably at least 135% higher than the tensile yield strength of the sheet in O temper.

10. A bottom part of battery box according to any one of claims 6 to 9, wherein the percentage of uniform elongation at maximum force Ag of the sheet is between 6% and 15% and preferably between 7.5% and 10%.

11. A bottom part of battery box according to any one of claims 1 to 10 wherein the sheet has a thickness of at most 3.5 mm and wherein the Center Position Maximum Force and the Corner Position Maximum Force, expressed in kN are at least 14 kN and preferably at least 14.5 kN and more preferably at least 15 kN.

12. A bottom part of battery box according to any one of claims 1 to 11, wherein the intergranular corrosion resistance of the sheet measured by Nitric Acid Mass Loss Test NAMLT according to ASTM G67 standard is less than 3 mg/cm² and less than 5 mg/cm² after aging for 17 hours at 130 °C.

13. A method to make a bottom part of battery box according to any one of claims 1 to 12 comprising successively
- preparing an aluminium alloy comprising comprises 2.5 to 4.0 wt.% of Mg, 0.1 to 0.8 wt.% of Mn, 0.4 wt.% or less of Si, 0.5 wt.% or less of Fe, 0.5 wt.% or less of Cu, at most 0.05 wt.% of Cr, 0.1 wt.% or less of Zn, 0.1 wt.% or less of Ti, rest aluminium and unavoidable impurities up to 0.05 wt.% each and 0.15 wt.% total;
- casting said aluminium alloy into a rolling ingot;
- homogenizing and/or reheating said rolling ingot;
- hot rolling and optionally cold rolling said rolling ingot to obtain a sheet with a thickness between 2 mm and 6 mm.

14. A method according to claim 13, further comprising
- partially annealing the sheet to a H2X temper, preferably at a temperature between 180 °C and 270 °C and preferentially at a temperature between 180 °C and 240 °C
- optionally surface treating the sheet typically by formation of a chemical conversion coating,
- cutting to size and optionally forming.

15. A method according to claim 13, further comprising
- partially annealing the sheet to a H2X temper, in a continuous annealing furnace typically with a peak metal temperature range from 250 °C to 400 °C and preferably from 300 °C to 350 °C,
- optionally surface treating the sheet typically by formation of a chemical conversion coating,
- cutting to size and optionally forming.

## Patentansprüche

1. Bodenteil eines Batteriegehäuses für Elektro- oder Hybridkraftfahrzeuge, das aus einem Aluminiumlegierungsblech besteht, das eine Dicke zwischen 2 und 6 mm aufweist, wobei die Aluminiumlegierung 2,5 bis 4,0 Gew.-% Mg, 0,1 bis 0,8 Gew.-% Mn, 0,4 Gew.-% oder weniger Si, 0,5 Gew.-% oder weniger Fe, 0,5 Gew.-% oder weniger Cu, 0,05 Gew.-% oder weniger Cr, 0,1 Gew.-% oder weniger Zn, 0,1 Gew.-% oder weniger Ti, Rest Aluminium und unvermeidbare Verunreinigungen bis zu jeweils 0,05 Gew.-% und 0,15 Gew.-% insgesamt, umfasst.

2. Bodenteil eines Batteriegehäuses nach Anspruch 1, wobei der Mn-Gehalt 0,5 bis 0,7 Gew.-% und bevorzugt 0,51 bis 0,61 Gew.-% beträgt.

3. Bodenteil eines Batteriegehäuses nach Anspruch 1 oder Anspruch 2, wobei der Si-Gehalt 0,1 bis 0,3 Gew.-% und bevorzugt 0,10 bis 0,25 Gew.-% beträgt.

4. Bodenteil eines Batteriegehäuses nach einem der Ansprüche 1 bis 3, wobei der Fe-Gehalt 0,1 bis 0,4 Gew.-% und bevorzugt 0,15 bis 0,35 Gew.-% beträgt.

5. Bodenteil eines Batteriegehäuses nach einem der Ansprüche 1 bis 4, wobei der Mg-Gehalt 2,8 bis 3,6 Gew.-% und bevorzugt 3,0 bis 3,4 Gew.-% und noch bevorzugter 3,1 bis 3,3 Gew.-% beträgt.

6. Bodenteil eines Batteriegehäuses nach einem der Ansprüche 1 bis 5, wobei das Blech in einer H2X-Vergütung vorliegt.

7. Bodenteil eines Batteriegehäuses nach Anspruch 6, wobei das partielle Glühen der H2X-Vergütung durch ein Glühen bei einer Temperatur zwischen 180 °C und 270 °C und bevorzugt bei einer Temperatur zwischen 180 °C und 240 °C, typischerweise durch Chargenglühen, erhalten wird.

8. Bodenteil eines Batteriegehäuses nach Anspruch 6, wobei das partielle Glühen der H2X-Vergütung mit einem Durchlaufglühofen, typischerweise mit einem Spitzenmetalltemperaturbereich von 250 °C bis 400 °C und bevorzugt von 300 °C bis 350 °C, erhalten wird.

9. Bodenteil eines Batteriegehäuses nach einem der Ansprüche 6 bis 8, wobei in der LT-Richtung die Zugfestigkeit Rm des Blechs mindestens 25 %, vorzugsweise mindestens 35 % und bevorzugt mindestens 40 % höher ist als die Zugfestigkeit des Blechs in O-Vergütung und/oder die Streckgrenzen-Zugfestigkeit Rp0,2 des Blechs mindestens 115 %, vorzugsweise mindestens 125 % und bevorzugt mindestens 135 % höher ist als die Streckgrenzen-Zugfestigkeit des Blechs in O-Vergütung.

10. Bodenteil eines Batteriegehäuses nach einem der Ansprüche 6 bis 9, wobei der Prozentsatz der Gleichmaßdehnung bei maximaler Kraft Ag des Blechs zwischen 6 % und 15 % und bevorzugt zwischen 7,5 % und 10 % liegt.

11. Bodenteil eines Batteriegehäuses nach einem der Ansprüche 1 bis 10, wobei das Blech eine Dicke von höchstens 3,5 mm aufweist und wobei die maximale Kraft in der Mittelposition und die maximale Kraft in der Eckposition, ausgedrückt in kN, mindestens 14 kN und bevorzugt mindestens 14,5 kN und bevorzugter mindestens 15 kN betragen.

12. Bodenteil eines Batteriegehäuses nach einem der Ansprüche 1 bis 11, wobei die interkristalline Korrosionsbeständigkeit des Blechs, durch Salpetersäure-Massenverlusttest NAMLT nach der Norm ASTM G67 gemessen, weniger als 3 mg/cm2 und weniger als 5 mg/cm2 nach 17 Stunden Auslagerung bei 130 °C beträgt.

13. Verfahren, um ein Bodenteil eines Batteriegehäuses nach einem der Ansprüche 1 bis 12 herzustellen, nacheinander umfassend
- Herstellen einer Aluminiumlegierung, die 2,5 bis 4,0 Gew.-% Mg, 0,1 bis 0,8 Gew.-% Mn, 0,4 Gew.-% oder weniger Si, 0,5 Gew.-% oder weniger Fe, 0,5 Gew.-% oder weniger Cu, 0,05% Gew.-% oder weniger Cr, 0,1 Gew.-% oder weniger Zn, 0,1 Gew.-% oder weniger Ti, Rest Aluminium und unvermeidbare Verunreinigungen bis zu jeweils 0,05 Gew.-% und 0,15 Gew.-% insgesamt, umfasst;
- Gießen der Aluminiumlegierung zu einem Walzbarren;
- Homogenisieren und/oder Wiedererhitzen des Walzbarrens;
- Heißwalzen und gegebenenfalls Kaltwalzen des Walzbarrens, um ein Blech mit einer Dicke zwischen 2 mm und 6 mm zu erhalten.

14. Verfahren nach Anspruch 13, weiter umfassend
- partielles Glühen des Blechs auf eine H2X-Vergütung, bevorzugt bei einer Temperatur zwischen 180 °C und 270 °C und vorzugsweise bei einer Temperatur zwischen 180 °C und 240 °C,
- gegebenenfalls Oberflächenbehandeln des Blechs, typischerweise durch Bilden einer chemischen Konversionsbeschichtung,
- Zuschneiden auf Größe und gegebenenfalls Formen.

15. Verfahren nach Anspruch 13, weiter umfassend
- partielles Glühen des Blechs auf eine H2X-Vergütung in einem Durchlaufglühofen, typischerweise mit einem Spitzenmetalltemperaturbereich von 250 °C bis 400 °C und bevorzugt von 300 °C bis 350 °C,
- gegebenenfalls Oberflächenbehandeln des Blechs, typischerweise durch Bilden einer chemischen Konversionsbeschichtung,
- Zuschneiden auf Größe und gegebenenfalls Formen.

## Revendications

1. Une partie basse de caisson de batteries pour véhicules à moteur électrique ou hybride, réalisée dans une tôle d'alliage d'aluminium ayant une épaisseur comprise entre 2 et 6 mm, dans laquelle ledit alliage d'aluminium comprend, en teneurs pondérales, 2,5 à 4,0 % de Mg, 0,1 à 0,8 % de Mn, 0,4 % au maximum de Si, 0,5 % au maximum de Fe, 0,5 % au maximum de Cu, 0,05% au maximum de Cr, 0,1 % au maximum de Zn, 0,1 % au maximum de Ti, le reste étant constitué d'aluminium et d'impuretés inévitables jusqu'à 0,05 % chacun et 0,15 % en tout.

2. Une partie basse de caisson de batteries selon la revendication 1, dans laquelle la teneur pondérale en Mn est comprise entre 0,5 et 0,7 % et, de préférence, entre 0,51 et 0,61 %.

3. Une partie basse de caisson de batteries selon la revendication 1 ou la revendication 2, dans laquelle la teneur pondérale en Si est comprise entre 0,1 et 0,3 % et, de préférence, entre 0,10 et 0,25 %.

4. Une partie basse de caisson de batteries selon l'une quelconque des revendications 1 à 3, dans laquelle la teneur pondérale en Fe est comprise entre 0,1 et 0,4 % et, de préférence, entre 0,15 et 0,35 %.

5. Une partie basse de caisson de batteries selon l'une quelconque des revendications 1 à 4, dans laquelle la teneur pondérale en Mg va de préférence de 2,8 à 3,6 %, préférentiellement de 3,0 à 3,4 % et idéalement de 3,1 à 3,3 %.

6. Une partie basse de caisson de batteries selon l'une quelconque des revendications 1 à 5, dans laquelle la tôle est dans un état métallurgique H2X.

7. Une partie basse de caisson de batteries selon la revendication 6, dans laquelle l'état restauré de l'état métallurgique H2X est obtenu par un recuit à une température comprise entre 180 °C et 270 °C et, de préférence, à une température comprise entre 180 °C et 240 °C, typiquement par recuit statique.

8. Une partie basse de caisson de batteries selon la revendication 6, dans laquelle l'état restauré de l'état métallurgique H2X est obtenu avec un four de recuit en continu typiquement avec une température de métal de pointe de 250 °C à 400 °C, et de préférence de 300 °C à 350 °C.

9. Une partie basse de caisson de batteries selon l'une quelconque des revendications de 6 à 8, dans laquelle, dans la direction TL, la résistance à la rupture Rₘ de la tôle est d'au moins 25 %, de préférence d'au moins 35 %, et de préférence d'au moins 40 % plus élevée que la résistance à la rupture de la tôle dans l'état métallurgique O et/ou la limite d'élasticité R_{p0,2} de la tôle est d'au moins 115 %, de préférence d'au moins 125 % et, de préférence, d'au moins 135% plus élevée que la limite d'élasticité de la tôle dans l'état métallurgique O.

10. Une partie basse de caisson de batteries selon l'une quelconque des revendications 6 à 9, dans laquelle le pourcentage d'allongement uniforme à la force maximale Ag de la tôle est compris entre 6 % et 15 % et, de préférence, entre 7,5 % et 10 %.

11. Une partie basse de caisson de batteries selon l'une quelconque des revendications 1 à 10, dans laquelle la tôle a une épaisseur d'au plus 3,5 mm et dans laquelle la force maximale en position centrale et la force maximale en position du coin, exprimées en kN, sont d'au moins 14 kN, de préférence d'au moins 14,5 kN et, idéalement, d'au moins 15 kN.

12. Une partie basse de caisson de batteries selon l'une quelconque des revendications 1 à 11, dans laquelle la résistance à la corrosion intergranulaire de la tôle, mesurée par l'essai de perte de masse à l'acide nitrique NAMLT conforme à la norme ASTM G67, est inférieure à 3 mg/cm² et inférieure à 5 mg/cm² après revenu pendant 17 heures à 130 °C.

13. Une méthode pour réaliser une partie basse de caisson de batteries selon l'une quelconque des revendications 1 à 12, comprenant successivement :
- l'élaboration d'un alliage d'aluminium comprenant, en teneurs pondérales, 2,5 à 4,0 % de Mg, 0,1 à 0,8 % de Mn, 0,4 % au maximum de Si, 0,5 % au maximum de Fe, 0,5 % au maximum de Cu, 0,05 % au maximum de Cr, 0,1 % au maximum de Zn, 0,1 % au maximum de Ti, le reste étant constitué d'aluminium et d'impuretés inévitables jusqu'à 0,05 % chacun et 0,15 % en tout ;
- la coulée dudit alliage d'aluminium pour former une plaque à laminer ;
- l'homogénéisation et/ou le réchauffage de ladite plaque ;
- le laminage à chaud et, en option, le laminage à froid de ladite plaque pour obtenir une tôle d'une épaisseur comprise entre 2 mm et 6 mm.

14. Une méthode selon la revendication 13, comprenant également :
- restauration de la tôle à l'état H2X, de préférence à une température comprise entre 180 °C et 270 °C et, préférentiellement, à une température comprise entre 180 °C et 240 °C,
- optionnellement traitement de la surface de la tôle, typiquement par la formation d'un revêtement de conversion chimique,
- découpage à dimension et, en option, un formage.

15. Une méthode selon la revendication 13, comprenant également :
- restauration de la tôle à l'état H2X, dans un four de recuit en continu typiquement avec une température de métal de pointe de 205 °C à 400 °C, et de préférence entre 300 °C et 350 °C,
- optionnellement traitement de la surface de la tôle, typiquement par la formation d'un revêtement de conversion chimique,
- un découpage à dimension et, en option, un formage.
